# EUROPÄISCHE PATENTSCHRIFT

(11) **EP 1 520 389 B1**
(45) Veröffentlichungstag und Bekanntmachung des Hinweises auf die Patenterteilung: **10.08.2016**
(21) Anmeldenummer: 03740066.0
(22) Anmeldetag: 06.06.2003
(51) Int. Cl.: H04L 29/08, H04L 29/06, H04M 7/00, H04M 7/12

(54) **NETZWERK MIT IN KOMMUNIKATIONSKOMPONENTEN INTEGRIERTEN SUCHFUNKTIONEN**
NETWORK COMPRISING SEARCH FUNCTIONS THAT ARE INTEGRATED INTO COMMUNICATION COMPONENTS
RESEAU PRESENTANT DES FONCTIONS DE RECHERCHE INTEGREES DANS DES COMPOSANTS DE COMMUNICATION

(30) Priorität: 08.07.2002 DE 10230684
(43) Veröffentlichungstag der Anmeldung: 06.04.2005
(73) Patentinhaber: Unify GmbH & Co. KG, 81379 München (DE)
(72) Erfinder: NEUHAUS, Ralf, 44534 Lünen (DE); UECKER, Rainer, 45470 Mülheim a.d. Ruhr (DE)
(74) Vertreter: Fritzsche, Thomas
(86) Internationale Anmeldenummer: PCT/DE2003/001900
(87) Internationale Veröffentlichungsnummer: WO 2004/006530

(56) Entgegenhaltungen:
- EP-A- 1 229 442
- WO-A-02/23822
- US-A1- 2002 073 204
- US-B1- 6 269 099

## Beschreibung

In paketvermittelnden Netzwerken (IP-Netze; IP = Internet-Protokoll) kommunizieren die Komponenten des Netzwerks, indem sie adressierte Datenpakete versenden und empfangen. Zur Kommunikation im Netzwerk benötigt jede Komponente eine eigene Netzwerkadresse. Außerdem setzt die Kommunikation die Kenntnis der Netzwerkadresse des Kommunikationspartners voraus. Erst dann ist eine direkte Kommunikation möglich, also ohne Zwischenschaltung einer weiteren Instanz. Die Netzwerkadressen sind jeder Komponente entweder fest zugeordnet, oder aber sie werden beim Einschalten der Komponenten diesen dynamisch, also für eine begrenzte Zeit, zugeordnet. Diese Zuteilung der Netzwerkadressen zu den Komponenten geschieht meist durch einen Server als zentrale Instanz im Netzwerk. Von einem solchen Server beziehen die Komponenten im Netzwerk auch die Netzwerkadressen anderer Komponenten, um mit diesen Daten auszutauschen. Solche Einrichtungen zur Verwaltung von Netzwerkadressen werden häufig auch in Kommunikationsnetzen eingesetzt, die nach dem Internet-Protokoll arbeiten. Diese Kommunikationsnetze werden in der Literatur als Voice-over-IP-Netze (VoIP) bezeichnet.

In VoIP-Netzen sind neben den als Kommunikations-Endgerät genutzten Kommunikationskomponenten, also Telefonen, Telefonie- und Multimedia-PCs etc., auch Kommunikationskomponenten angeordnet, die über Ressourcen wie zum Beispiel Gateways verfügen. Gateways sind in diesem Zusammenhang Einrichtungen, die das paketvermittelnde IP-Netz mit einem leitungsvermittelnden Netzwerk, beispielsweise dem ISDN, verbinden und somit Kommunikationsverbindungen zwischen Kommunikationskomponenten im VoIP-Netz und solchen im ISDN erst möglich machen. Wenn eine Kommunikationskomponente in einem IP-Netz eine Verbindung zu einem Telefon in einem ISDN-Netz aufbaut, benötigt die Kommunikationskomponente im IP-Netz die Information darüber, an welcher Stelle im Netzwerk ein geeignetes Gateway verfügbar ist. Die "Stelle" bezeichnet dabei nicht oder nicht nur eine geografische Stelle, sondern es bezeichnet in erster Linie die Netzwerkadresse derjenigen Komponente im Netzwerk, die die Ressource "Gateway" anderen Netzwerkkomponenten zur Verfügung stellt. Darüber hinaus benötigt die Kommunikationskomponente, welche die Kommunikationsverbindung aufbauen will, weitere Informationen über die Nutzung der Ressource, also beispielsweise Angaben über den möglichen Audio-Codec, Adressformate, Netzwerk-Port-Nummer etc..

Die Adressen der im eigenen Netzwerk erreichbaren Kommunikationskomponenten und die Angaben über die nutzbaren Ressourcen im Netzwerk sind entweder in jeder Kommunikationskomponente hinterlegt, oder sie sind in einem zentralen Server abrufbar, dem sogenannte Gatekeeper. In beiden Fällen ist eine Administrierung dieser Daten notwendig, also sowohl das erstmalige Eingeben, als auch eine andauernde Datenpflege bei Veränderungen der Netzstruktur oder der Kommunikationskomponenten.

Aus der im Internet publizierten Schrift "The Gnutella Protocol Specification V 0.4" ist ein Verfahren bekannt, mit dem Kommunikationskomponenten im Internet andere Kommunikationskomponenten auffinden können, um mit diesen Dateien auszutauschen. Der Datenaustausch findet dabei aber nicht unter Zuhilfenahme eines zentralen Servers oder Gatekeepers statt, sondern in direkter Kommunikation zwischen den Kommunikationskomponenten. Solche Netzwerke, die ohne übergeordnete Instanz den direkten Datenaustausch zwischen Kommunikationskomponenten vorsehen, nennt man auch Peer-to-Peer-Netze, und die Kommunikationskomponenten, die Funktionalitäten sowohl von den "Clients" als auch von den "Servern" bekannter Netze umfassen, werden in der Literatur häufig "Servents" genannt. Im Peer-to-Peer-Netz nach der Gnutella-Spezifikation hält jede Kommunikationskomponente - hier handelt es sich um PCs - eine Anzahl Dateien zum Austausch mit anderen Kommunikationskomponenten bereit. Damit es zu einem Datenaustausch kommen kann, benötigt eine suchende Kommunikationskomponente die Netzwerkadresse einer anderen Kommunikationskomponente, die die gesuchte Datei zum Abruf bereit hält. Dazu versendet die suchende Kommunikationskomponente zunächst eine erste Suchmeldung, das sogenannte "ping". Die Kommunikationskomponenten, die eine solche "ping"-Suchmeldung erhalten, antworten der suchenden Kommunikationskomponente mit einer Trefferantwort, dem sogenannte "pong". In dieser Trefferantwort ist die Netzwerkadresse der antwortenden Kommunikationskomponente sowie die Anzahl der von dieser Kommunikationskomponente zum Austausch bereitgestellten Dateien enthalten. Im nächsten Schritt sendet die suchende Netzwerkskomponente eine zweite Suchmeldung "Query" an eine begrenzte Auswahl derjenigen Kommunikationskomponenten, die die "ping"-Suchmeldung mit einem "pong" beantwortet haben. Diese zweite Suchmeldung enthält den Dateinamen der gesuchten Datei. Falls eine Komponente eine zweite Suchmeldung "Query" empfängt und die gesuchte Datei selbst nicht zum Austausch bereithält, sendet diese Kommunikationskomponente diese zweite Suchmeldung an andere Kommunikationskomponenten im Netzwerk weiter, deren Adressen sie beispielsweise durch ein bereits in der Vergangenheit durchgeführtes "ping"-Verfahren ermittelt hat. Kann die Kommunikationskomponente die gewünschte Datei jedoch zum Austausch bereitstellen, beantwortet sie die zweite Suchmeldung "Query" mit einer zweiten Trefferantwort "Query Hit", wodurch die suchende Kommunikationskomponente in die Lage versetzt wird, die Datei-Übertragung mit Hilfe von im Internet-Protokoll definierten Befehlen zu initiieren.

Bei den bekannten Verfahren hat sich als nachteilig erwiesen, dass zur Nutzung von Ressourcen die Informationen über diese und deren Adressen im Netzwerk in einem oder mehreren zentralen Rechnern (Servern, Gatekeepern) verzeichnet sein müssen. Diese Daten müssen bei Start jeder Ressource hinterlegt und bei Änderungen gepflegt werden, was mit einem hohen, oft manuellen Aufwand verbunden ist. In der Zeit zwischen der Änderung von Adressen und Ressourcen und der Datenpflege ist darüber hinaus die Nutzung der betroffenen Ressource nicht möglich. Das gleiche gilt, wenn einer der zentralen Rechner (Server) ausfällt.

In WO 02/23822 A1 ist ein System zur Durchführung von Netzwerkadressübersetzungen (Network Address Translation, NAT) beschrieben, das es Anwendungen erlaubt, Information über durchzuführende Adressübersetzungen nachzufragen, so dass diese Anwendungen nützliche Informationen an andere Anwendungen senden können zu dem Zweck Anwendungen zu ermöglichen, mittels des NAT-Geräts in Abwesenheit von statisch definierten Regeln für bestimmte Kommunikationskanäle zu kommunizieren.

In der Offenlegungsschrift US 2002/0073204 A1 ist ein paketvermitteltes Netzwerk beschrieben, in dem Computer Dateien untereinander austauschen. Die Suche und die Übertragung der Dateien erfolgt auf Basis des Gnutella-Protokolls. Dem Benutzer eines Computers werden dabei Informationen über einen aufgefundenen anderen Computer angezeigt, die Zugangsparameter für diesen aufgefundenen Computer betreffen und Informationen über die auf diesem Computer gespeicherten und für einen Dateiaustausch nutzbaren Dateien umfassen. Diese Informationen werden dem Benutzer des Computers angezeigt, so dass dieser entscheiden kann, ob eine Verbindung zu dem aufgefundenen Computer zum Zwecke eines Dateiaustauschs bestehen bleiben oder abgebaut werden soll.

Aufgabe der Erfindung ist es, den Administrationsaufwand in Netzwerken zu verringern.

Die Lösung dieser Aufgabe ist bezogen auf die Anordnung durch die im Anspruch 1 und bezogen auf das Verfahren durch die in Anspruch 8 angegebenen Merkmale gegeben.

Die Lösung der Aufgabe sieht vor, dass die Ressourcen im Netzwerk nutzbare Gateways zur Verbindung eines paketvermittelnden Netzwerks mit einem leitungsvermittelnden Netzwerk umfassen, wobei die Beantwortung der zweiten Suchmeldung jeweils spezifische Informationen über das Gateway enthält, und dass auch die Kommunikationskomponenten, die die zweite Suchmeldung beantworten, die zweite Suchmeldung an andere Kommunikationskomponenten weiterleiten. Dadurch werden der suchenden Kommunikationskomponente die Adressen mehrerer oder aller der Kommunikationskomponenten übermittelt, die das gesuchte Gateway bereitstellen. Das Führen von Teilnehmerverzeichnissen mit den Netzwerkadressen der Kommunikationsendgeräte kann entfallen, wenn die anhand der Trefferantwort und anhand der Beantwortung von zweiten Suchmeldungen erlangten Adressen von Kommunikationskomponenten zum Aufbau von Kommunikationsverbindungen genutzt werden können.

Durch die kennzeichnenden Merkmale der Unteransprüche ist die Anordnung in vorteilhafter Weise weiter ausgestaltet.

Die Anzahl der Suchvorgänge verringert sich, wenn die Kommunikationskomponenten die Angaben über die im Netzwerk nutzbaren Ressourcen weiterer Kommunikationskomponenten speichern können.

Wenn die zweite Suchmeldung der Ermittlung der in einer Kommunikationskomponente gespeicherten Informationen über die nutzbaren Ressourcen von weiteren Kommunikationskomponenten dient, wobei die Beantwortung dieser Suchmeldung die Adressen und die nutzungsrelevanten Angaben umfasst, wird die durch die Suchvorgänge verursachte Netzlast vermindert.

Der Zugriff auf Ressourcen kann gesteuert werden, indem in den Kommunikationskomponenten der Zugriff auf einzelne oder alle eigenen Ressourcen durch andere Kommunikationskomponenten gesperrt oder freigegeben werden kann.

Wenn die Kommunikationskomponenten sowohl erste als auch zweite Suchmeldungen versenden und/oder beantworten können, können die im Netzwerk nutzbaren Ressourcen besonders schnell gefunden werden.

Gesuchte Ressourcen und Kommunikationsdienste werden auch in weit verzweigten Netzwerken zuverlässig aufgefunden, indem die Suchfunktion einer Kommunikationskomponente zumindest eine erste und solange zweite Suchmeldungen aussendet, bis eine gesuchte Ressource im Netzwerk aufgefunden ist und anhand der in der Beantwortung einer der zweiten Suchmeldungen übermittelten Informationen eine. Nutzung der Ressource stattfinden kann.

Aus mehreren aufgefundenen Ressourcen des gleichen Typs kann die jeweils am besten geeignete ausgewählt werden, wenn die Beantwortung Art und Anzahl der verfügbaren Dienste sowie Art des eigenen Netzwerkzugangs einschließlich Bandbreite und Verfügbarkeit und die Standortinformation umfasst.

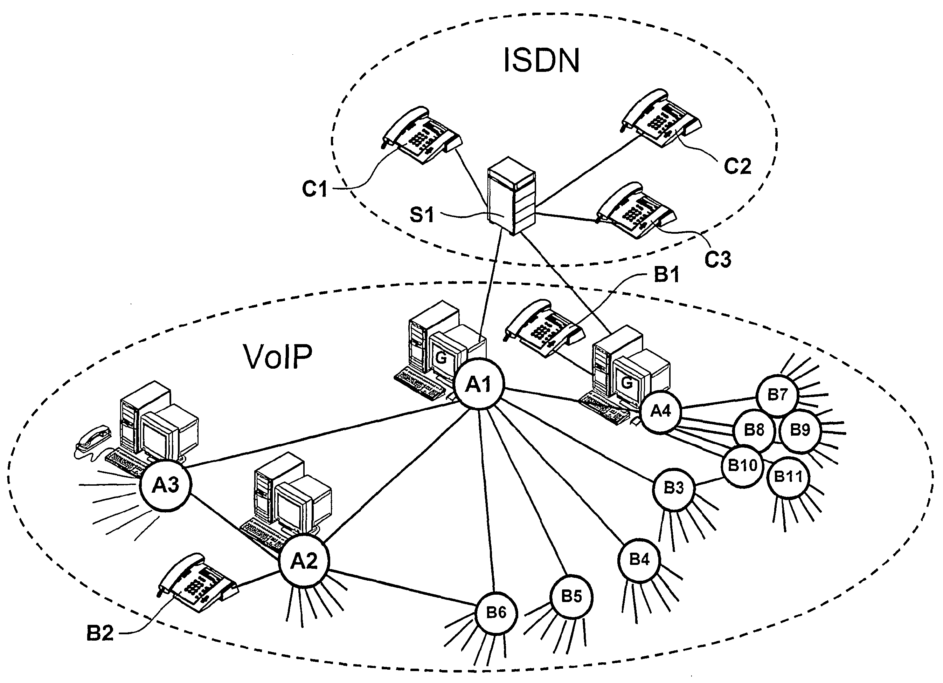

Ein Ausführungsbeispiel eines erfindungsgemäßen Netzwerks mit in Kommunikationskomponenten integrierten Suchfunktionen wird nachfolgend anhand der Zeichnung beschrieben. Dabei zeigt die einzige Figur in schematischer Darstellung ein paketvermittelndes Kommunikationsnetz, welches mit einem leitungsvermittelnden Kommunikationsnetzwerk verbunden ist.

Im paketvermittelnden Kommunikationsnetz VoIP sind Kommunikationskomponenten A1 - A4, B1 - B11 miteinander verbunden. Das paketvermittelnde Netzwerk VoIP ist in einer Mischform aus stern- und ringförmiger Vernetzung vermascht. Grundsätzlich ist jede Form der Vermaschung möglich, solange jede Kommunikationskomponente A1 - A4, B1 - B11 mit jeder anderen Komponente A1 - A4, B1 - B11 direkt oder indirekt, also unter Zwischenschaltung anderer Kommunikationskomponenten A1 - A4, B1 - B11, Daten austauschen kann.

Im leitungsvermittelnden Netzwerk ISDN sind eine Kommunikationsanlage S1 und Kommunikationsendgeräte C1 - C3 angeordnet. Selbstverständlich können im leitungsvermittelnden Netzwerk ISDN auch mehrere Kommunikationsanlagen mit einer beliebigen Anzahl Kommunikationsendgeräten angeordnet sein.

Die im paketvermittelnden Netzwerk VoIP angeordneten Kommunikationskomponenten A1, A4 sind jeweils mit einer Gateway-Funktion als Ressource ausgerüstet. Diese Gateway-Funktion verbindet das paketvermittelnde Netzwerk VoIP mit dem leitungsvermittelnden Netzwerk ISDN.

Die Kommunikationskomponente A3 ist mit einer Telephonie-Funktion ausgestattet. Mit Hilfe dieser Funktion können Sprachverbindungen zu allen im paketvermittelnden Netzwerk VoIP angeordneten Sprachendgeräten B1, B2 und allen anderen mit Telephonie-Funktion ausgestatteten Kommunikationskomponenten A1 - A4, B3 - B11 aufgebaut und genutzt werden. Die Kommunikationskomponente A3 kann auch Sprachverbindungen zu im ISDN angeordneten Kommunikationsendgeräten C1 - C3 aufbauen und nutzen. Dazu muss die Kommunikationskomponente A3 zunächst eine Verbindung zu einem auf der Kommunikationskomponente A1 bereitgestellten Gateway als Ressource aufbauen.

Zum Aufbau einer Sprachverbindung, ausgehend von der Kommunikationskomponente A3 im paketvermittelnden Netzwerk VoIP zu der im leitungsvermittelnden Netzwerk ISDN angeordneten Kommunikationskomponente C1 benötigt die auf der Kommunikationskomponente A3 installierte Telephonie-Funktion die Adresse der Kommunikationskomponente A1 sowie die Zugangsparameter und zur Nutzung relevanter Informationen des auf der Kommunikationskomponente A1 bereitgestellten Gateways. Alternativ ist die Nutzung des auf der Kommunikationskomponente A4 installierten Gateways möglich.

Die Adresse einer Kommunikationskomponente A1 - A4, B1 - B11 ist hier die Netzwerkadresse (IP-Adresse), mit der die Kommunikationskomponente A1 - A4, B1 - B11 selbst adressiert wird. Die auf einer Kommunikationskomponente A1 - A4, B1 - B11 vorhandenen Ressourcen werden anhand von IP-Portnummern unterschieden, so dass aus der Kombination der IP-Adresse und der IP-Portnummer jede Ressource eindeutig adressierbar ist.

Um die Adresse der Kommunikationskomponente A1 zu ermitteln, sendet die Telephonie-Funktion der Kommunikationskomponente A3 eine erste Suchmeldung zu einer Anzahl weiterer Kommunikationskomponenten A2, B6. Diese erste Suchmeldung umfasst neben der Adresse der absendenden Kommunikationskomponente A3 die Information darüber, dass von dieser andere Kommunikationskomponenten A1 - A4, B1 - B11 gesucht werden, die das verwendete Suchverfahren nach Komponenten und Ressourcen unterstützen. Da die beiden angesprochenen Kommunikationskomponenten A2, B6 das Suchverfahren unterstützen, senden sie jeweils eine Trefferantwort mit ihrer eigenen Adresse zur Kommunikationskomponente A3 zurück. Dann versendet die Kommunikationskomponente A3 eine zweite Suchmeldung an alle Kommunikationskomponenten A2, B6, die die erste Suchmeldung mit einer Trefferantwort beantwortet haben. Diese zweite Suchmeldung umfasst wiederum die Adresse der suchenden Kommunikationskomponente A3, jetzt aber auch die Information darüber, welcher Typ Ressource gesucht wird, nämlich ein Gateway zu einem leitungsvermittelnden Netzwerk. Da die Kommunikationskomponente A2 nicht über eine Ressource des gesuchten Typs "Gateway" verfügt, sendet sie die zweite Suchmeldung an weitere, benachbarte Kommunikationskomponenten A1, B3 weiter. Die Kommunikationskomponente B6 verfügt ebenfalls über keine Ressource des gesuchten Typs, so dass auch die Kommunikationskomponente B6 die zweite Suchmeldung an andere, ihr bekannte Kommunikationskomponenten B5, B4, die das verwendete Suchverfahren ebenfalls unterstützen, weiterleitet.

Die Kommunikationskomponente A1 verfügt über eine Ressource des gesuchten Typs "Gateway". Sie beantwortet die zweite Suchmeldung, indem sie der suchenden Kommunikationskomponente A3 eine Antwortmeldung zusendet, die neben der eigenen Netzwerkadresse Informationen über die von ihr bereitgestellten Ressourcen umfasst. Zu diesen Informationen gehören Angaben über die IP-Portnummer, die Anzahl der verfügbaren Kanäle, die Übertragungsbandbreite der Kanäle, die nutzbaren Übertragungsstandards, den Standort etc.. Diese Informationen werden nun von der Kommunikationskomponente A3 verwendet, um über das Gateway der Kommunikationskomponente A1 und die leitungsvermittelnde Kommunikationsanlage S1 eine Sprachverbindung zum Kommunikationsendgerät C1 aufzubauen, sofern die Nutzung dieser Ressource in der Kommunikationskomponente A1 freigegeben ist.

Obwohl die Kommunikationskomponente A1 die zweite Suchmeldung der Kommunikationskomponente A3, die ihr von der Kommunikationskomponente A2 übermittelt wurde, mit den Angaben über das auf ihr installierte Gateway positiv beantworten konnte, sendet sie dennoch die zweite Suchmeldung an ihr bekannte, ebenfalls das Suchverfahren unterstützende Kommunikationskomponenten A4, B7 weiter. Auch die Kommunikationskomponente A4 verfügt über ein Gateway zum leitungsvermittelnden Netzwerk ISDN und sendet daher einen Datensatz mit ihrer Adresse und den Informationen über das Gateway zur ursprünglich suchenden Kommunikationskomponente A3 zurück. Somit gelangen zur Kommunikationskomponente A3 Informationen über die beiden im paketvermittelnden Netzwerk VoIP aufgefundenen Ressourcen des Typs "Gateway".

Die Informationen über die aufgefundenen Ressourcen im paketvermittelnden Netzwerk VoIP werden in der Kommunikationskomponente A3 gespeichert. Wenn zu einem späteren Zeitpunkt eine andere der Kommunikationskomponenten A1 - A4, B1 - B11 zum Aufbau einer Sprachverbindung ein Gateway zum leitungsvermittelnden Netzwerk ISDN benötigt und im Zuge des Suchverfahrens eine zweite Suchmeldung zur Kommunikationskomponente A3 zu versendet, so beantwortet die Kommunikationskomponente A3 mit Hilfe der gespeicherten Informationen die Suchmeldung, obwohl sie selber nicht über eine Ressource des gewünschten Typs verfügt, aber dennoch die Adressen und die nutzungsrelevanten Informationen über solche Ressourcen bereitstellen kann. Die Kommunikationskomponente A3 kann zu diesem Zweck erste und zweite Suchmeldungen sowohl versenden, als auch beantworten.

Sowohl jede suchende Kommunikationskomponente A1 - A4, B1 - B11, als auch die bei der Suche angesprochenen anderen Kommunikationskomponenten A1 - A4, B1 - B11 setzen den Vorgang des Versendens und Beantwortens von ersten und zweiten Suchmeldungen so lange fort, bis zumindest eine Ressource des gesuchten Typs aufgefunden ist. Dabei sind jedoch zur Begrenzung der Netzlast Grenzen vorgegeben, die sowohl die Anzahl der von einer ersten bzw. einer zweiten Suchmeldung angesprochenen Kommunikationskomponenten A1 - A4, B1 - B11, als auch die Anzahl, wie oft eine nicht positiv beantwortete zweite Suchmeldung von einer Kommunikationskomponente A1 - A4, B1 - B11 zur nächsten weitergeleitet wird, begrenzen.

## Patentansprüche

1. Paketvermittelndes Netzwerk (VoIP) mit Kommunikationskomponenten (A1 - A4, B1 - B11), denen Adressen zugeordnet sind und die eingerichtet sind anhand dieser Adressen miteinander zu kommunizieren,
wobei,
a) mehrere der Kommunikationskomponenten (A1 - A4, B1 - B11) Ressourcen, die in dem Netzwerk (VoIP) nutzbare Gateways zur Verbindung des paketvermittelnden Netzwerks (VoIP) mit einem leitungsvermittelnden Netzwerk (ISDN) umfassen, aufweisen,
wobei in mehreren der Kommunikationskomponenten (A1 - A4, B1 - B11) Suchfunktionsmittel zur Ermittlung der Adressen von die Ressourcen aufweisenden weiteren Kommunikationskomponenten (A1 - A4, B1 - B11) integriert sind,
b) jedes dieser Suchfunktionsmittel zur Ermittlung der Adressen zur Aussendung einer ersten Suchmeldung, die neben der Adresse der Kommunikationskomponente (A3), deren Suchfunktionsmittel die erste Suchmeldung aussendet, eine Information darüber umfasst, dass andere Kommunikationskomponenten (A1, A2, A4, B1 - B11) gesucht werden, die das Suchfunktionsmittel unterstützen, ausgebildet ist,
c) jede erreichte Kommunikationskomponente, die das Suchfunktionsmittel unterstützt, eingerichtet ist in Folge der ersten Suchmeldung eine Trefferantwort mit ihrer Adresse zurückzusenden,
d) anschließend das Suchfunktionsmittel eingerichtet ist zumindest eine eine Information über den gesuchten Typ Ressource in Form des Gateways umfassende zweite Suchmeldung zu zumindest einer der Kommunikationskomponenten (A1, A2, A4, B1 - B11), die die erste Suchmeldung mit der Trefferantwort beantwortet haben, auszusenden und zumindest eine der Kommunikationskomponenten (A1 - A4, B1 - B11), die den gesuchten Typ Ressource in Form des Gateways bereitstellen kann, eingerichtet ist die zweite Suchmeldung zu beantworten, wobei
e) die Beantwortung der zweiten Suchmeldung jeweils spezifische Informationen über das Gateway enthält,
f) auch die Kommunikationskomponenten (A1 - A4, B1 - B11), die die zweite Suchmeldung beantworten, eingerichtet sind die zweite Suchmeldung an andere Kommunikationskomponenten (A1 - A4, B1 - B11) weiterzuleiten, und
g) die anhand der Trefferantwort und anhand der Beantwortung von der zweiten Suchmeldung erlangten Adressen der Kommunikationskomponenten (A1 - A4, B1 - B11) zum Aufbau von Kommunikationsverbindungen genutzt werden können.

2. Netzwerk nach Anspruch 1,
**dadurch gekennzeichnet,**
**dass** die Kommunikationskomponenten (A1 - A4, B1 - B11) zur Speicherung von Angaben über die im Netzwerk (VoIP) nutzbaren Ressourcen weiterer Kommunikationskomponenten (A1 - A4, B1 - B11) eingerichtet sind.

3. Netzwerk nach Anspruch 1 oder 2,
**dadurch gekennzeichnet,**
**dass** die zweite Suchmeldung für die Ermittlung der in einer Kommunikationskomponente (A1 - A4, B1 - B11) gespeicherten Informationen über die nutzbaren Ressourcen von weiteren Kommunikationskomponenten (A1 - A4, B1 - B11) ausgebildet ist, wobei die Beantwortung dieser Suchmeldung die Adressen und die nutzungsrelevanten Angaben umfasst.

4. Netzwerk nach einem der vorhergehenden Ansprüche 1 bis 3, **dadurch gekennzeichnet,**
**dass** die Kommunikationskomponenten (A1 - A4, B1 - B11) derart eingerichtet sind, dass in den Kommunikationskomponenten (A1 - A4, B1 - B11) der Zugriff auf einzelne oder alle eigenen Ressourcen durch andere Kommunikationskomponenten (A1 - A4, B1 - B11) gesperrt oder freigegeben werden kann.

5. Netzwerk nach einem der vorhergehenden Ansprüche 1 bis 4, **dadurch gekennzeichnet,**
**dass** die Kommunikationskomponenten (A1 - A4, B1 - B11) eingerichtet sind sowohl erste als auch zweite Suchmeldungen versenden und/oder beantworten zu können.

6. Netzwerk nach einem der vorhergehenden Ansprüche 1 bis 5, **dadurch gekennzeichnet,**
**dass** das Suchfunktionsmittel derart eingerichtet ist, dass dieses zumindest eine erste und solange zweite Suchmeldungen aussendet, bis die gesuchte Ressource in Form des Gateways in dem Netzwerk (VoIP) aufgefunden ist und anhand der in der Beantwortung einer der zweiten Suchmeldungen übermittelten Informationen eine Nutzung der Ressource in Form des Gateways stattfinden kann.

7. Netzwerk nach einem der vorhergehenden Ansprüche 1 bis 6, **dadurch gekennzeichnet,**
**dass** die Beantwortung Art und Anzahl der verfügbaren Dienste sowie Art des eigenen Netzwerkzugangs einschließlich Bandbreite und Verfügbarkeit und die Standortinformation umfasst.

8. Verfahren zur selbsttätigen Administrierung eines paketvermittelnden Netzwerks (VoIP) mit Kommunikationskomponenten (A1 - A4, B1 - B11), denen Adressen zugeordnet sind und die anhand dieser Adressen miteinander kommunizieren, wobei,
a) mehrere der Kommunikationskomponenten (A1 - A4, B1 - B11) Ressourcen, die in dem Netzwerk (VoIP) nutzbare Gateways zur Verbindung des paketvermittelnden Netzwerks (VoIP) mit einem leitungsvermittelnden Netzwerk (ISDN) umfassen, aufweisen,
wobei in mehreren der Kommunikationskomponenten (A1 - A4, B1 - B11) integrierte Suchfunktionen zur Ermittlung der Adressen von die Ressourcen aufweisenden weiteren Kommunikationskomponenten (A1 - A4, B1 - B11) verwendet werden,
b) von jeder dieser Suchfunktionen zur Ermittlung der Adressen eine erste Suchmeldung, die neben der Adresse der Kommunikationskomponente (A3), deren Suchfunktion die erste Suchmeldung aussendet, eine Information darüber umfasst, dass andere Kommunikationskomponenten (A1, A2, A4, B1 - B11) gesucht werden, die die Suchfunktion unterstützen, ausgesendet wird,
c) in Folge der ersten Suchmeldung von jeder erreichten Kommunikationskomponente (A1, A2, A4, B1 - B11), die die Suchfunktion unterstützt, eine Trefferantwort mit ihrer Adresse zurückgesendet wird,
d) anschließend durch die Suchfunktion zumindest eine eine Information über den gesuchten Typ Ressource in Form des Gateways umfassende zweite Suchmeldung zu zumindest einer der Kommunikationskomponenten (A1 - A4, B1 - B11), die die erste Suchmeldung mit der Trefferantwort beantwortet haben, ausgesendet wird und zumindest von einer der Kommunikationskomponenten (A1 - A4, B1 - B11), die den gesuchten Typ Ressource in Form des Gateways bereitstellen kann, die zweite Suchmeldung beantwortet wird, wobei
e) die Beantwortung der zweiten Suchmeldung jeweils spezifische Informationen über das Gateway enthält,
f) auch von den Kommunikationskomponenten (A1 - A4, B1 - B11), die die zweite Suchmeldung beantworten, die zweite Suchmeldung an andere Kommunikationskomponenten (A1 - A4, B1 - B11) weitergeleitet wird, und
g) die anhand der Trefferantwort und anhand der Beantwortung von der zweiten Suchmeldung erlangten Adressen der Kommunikationskomponenten (A1 - A4, B1 - B11) zum Aufbau von Kommunikationsverbindungen genutzt werden.

## Claims

1. A packet switching network (VoIP) with communication components (A1 - A4, B1 - B11), with which addresses are associated and which are arranged to communicate with each other using these addresses,
wherein
a) several of the communication components (A1 - A4, B1 - B11) comprise resources which contain usable gateways in the network (VoIP) for connecting the packet switching network (VoIP) to a circuit-switched network (ISDN),
wherein search function means for determining the addresses of other communication components (A1 - A4, B1 - B11) comprising the resources are integrated in several of the communication components (A1 - A4, B1 - B11),
b) each of these search function means is designed for determining the addresses for transmitting a first query which contains, in addition to the address of the communication component (A3), whose search function means transmits the first query, information about the fact that other communication components (A1 , A2, A4, B1 - B11) are sought which support the search function means,
c) each reached communication component which supports the search function means is designed to return a query hit with its address in the sequence of the first query,
d) the search function means is subsequently arranged to transmit at least one second query comprising information about the sought resource type in the form of the gateway to at least one of the communication components (A1 , A2, A4, B1 - B11) which responded to the first query with the query hit and at least one of the communication components (A1 - A4, B1 - B11) which can make available the sought resource type in the form of the gateway is arranged to respond to the second query, wherein
e) the response to the second query contains specific information about the gateway,
f) even the communication components (A1 - A4, B1 - B11) that respond to the second query are designed to forward the second query to other communication components (A1 - A4, B1 - B11), and
g) the addresses of the communication components (A1 - A4, B1 - B11) obtained using the query hit and using the response from the second query can be used to construct communication connections.

2. The network according to Claim 1,
**characterized in that**
the communication components (A1 - A4, B1 - B11) are designed to store data about the resources of other communication components (A1 - A4, B1 - B11) that can be used in the network (VoIP).

3. The network according to Claim 1 or 2,
**characterized in that**
the second query is designed to determine the information stored in a communication component (A1 - A4, B1 - B11) about the usable resources of other communication components (A1 - A4, B1 - B11), wherein the response to this query contains the addresses and the data relevant for utilization.

4. The network according to one of the previous claims 1 to 3, **characterized in that**
the communication components (A1 - A4, B1 - B11) are arranged in such a manner that in the communication components (A1 - A4, B1 - B11) the access to individual or to all proprietary resources can be blocked or released by other communication components (A1 - A4, B1 - B11).

5. The network according to one of the previous claims 1 to 4, **characterized in that**
the communication components (A1 - A4, B1 - B11) are arranged so as to be able to transmit and/or respond to first as well as to second queries.

6. The network according to one of the previous claims 1 to 5, **characterized in that**
the search function means is arranged in such a manner that it transmits at least one first query and second queries until the sought resource is found in the network (VoIP) in the form of the gateway and a utilization of the resource in the form of the gateway can take place using the information transmitted in the response of one of the second queries.

7. The network according to one of the previous claims 1 to 6, **characterized in that**
the response comprises the type and the number of the available services and the type of the proprietary network access including bandwidth and availability and the location information.

8. A method for the automatic administration of a packet switching network (VoIP) with communication components (A1 - A4, B1 - B11), with which addresses are associated and which communicate with each other using these addresses,
wherein
a) several of the communication components (A1 - A4, B1 - B11) comprise resources which contain usable gateways in the network (VoIP) for connecting the packet switching network (VoIP) to a circuit-switched network (ISDN),
wherein integrated search function means for determining the addresses of other communication components (A1 - A4, B1 - B11) comprising the resources are used in several of the communication components (A1 - A4, B1 - B11),
b) from each of these search functions for determining the addresses a first query is transmitted which transmits, in addition to the address of the communication component (A3) whose search function transmits the first query, information that other communication components (A1 , A2, A4, B1 - B11) are being sought which support the search function,
c) a query hit with its address is sent back following the first query from each reached communication component (A1 , A2, A4, B1 - B11) which supports the search function,
d) at least one second query comprising information about the sought resource type in the form of the gateway is subsequently transmitted by the search function to at least one of the communication components (A1 - A4, B1 - B11) which responded to the first query with the query hit and the second query is responded to by at least one of the communication components (A1 - A4, B1 - B11) which can make available the sought resource type in the form of the gateway, wherein
e) the response to the second query contains specific information about the gateway,
f) the second query is forwarded to other communication components (A1 - A4, B1 - B11) also by the communication components (A1 - A4, B1 - B11) which respond to the second query, and
g) the addresses of the communication components (A1 - A4, B1 - B11) obtained using the query hit and using the response from the second query are used to build up communication connections.

## Revendications

1. Réseau à commutation de paquets (VoIP) comprenant des composants de communication (A1 - A4, B1 - B11), auxquels sont associées des adresses et qui sont mis au point pour communiquer les uns avec les autres à l'aide desdites adresses,
sachant
a) que plusieurs des composants de communication (A1 - A4, B1 - B11) présentent des ressources, qui comprennent des passerelles pouvant être utilisées dans le réseau (VoIP), servant à connecter le réseau à commutation de paquets (VoIP) à un réseau à commutation de circuits (ISDN), sachant que des moyens fonctionnels de recherche servant à déterminer les adresses de composants de communication (A1 - A4, B1 - B11) supplémentaires présentant les ressources sont intégrés dans plusieurs des composants de communication (A1 - A4, B1 - B11),
b) que chaque moyen fonctionnel de recherche servant à déterminer les adresses est réalisé afin d'envoyer un premier message de recherche, qui comprend, outre l'adresse du composant de communication (A3), dont le moyen fonctionnel de recherche envoie le premier message de recherche, une information portant sur le fait que d'autres composants de communication (A1, A2, A4, B1 - B11) sont recherchés, lesquelles supportent le moyen fonctionnel de recherche,
c) que chaque composant de communication atteint, qui supporte le moyen fonctionnel de recherche, est mis au point pour, suite au premier message de recherche, retourner une réponse pertinente avec son adresse,
d) qu'immédiatement après le moyen fonctionnel de recherche est mis au point pour envoyer à au moins un des composants de communication (A1, A2, A4, B1 - B11), qui ont répondu au premier message de recherche avec la réponse pertinente, au moins un deuxième message de recherche comprenant une information portant sur le type recherché de ressource sous la forme de la passerelle, et qu'au moins un des composants de communication (A1 - A4, B1 - B11), qui peut fournir le type recherché de ressource sous la forme de la passerelle, est mis au point pour répondre au deuxième message de recherche, sachant
e) que la réponse au deuxième message de recherche inclut respectivement des informations spécifiques portant sur la passerelle,
f) que les composants de communication (A1 - A4, B1 - B11), qui répondent au deuxième message de recherche, sont également mis au point pour transférer le deuxième message de recherche à d'autres composants de communication (A1 - A4, B1 - B11), et
g) que les adresses, obtenues à l'aide de la réponse pertinente et à l'aide de la réponse au deuxième message de recherche, des composants de communication (A1 - A4, B1 - B11) peuvent être utilisées afin d'établir des connexions de communication.

2. Réseau selon la revendication 1,
**caractérisé en ce**
**que** les composants de communication (A1 - A4, B1 - B11) sont mis au point pour sauvegarder des indications portant sur les ressources pouvant être utilisées dans le réseau (VoIP) de composants de communication (A1 - A4, B1 - B11) supplémentaires.

3. Réseau selon la revendication 1 ou 2,
**caractérisé en ce**
**que** le deuxième message de recherche est réalisé en vue de la détermination des informations sauvegardées dans un composant de communication (A1 - A4, B1 - B11), portant sur les ressources pouvant être utilisées de composants de communication (A1 - A4, B1 - B11) supplémentaires, sachant que la réponse audit message de recherche comprend les adresses et les indications importantes à utiliser.

4. Réseau selon l'une quelconque des revendications précédentes 1 à 3,
**caractérisé en ce**
**que** les composants de communication (A1 - A4, B1 - B11) sont mis au point de telle manière que l'accès aux diverses ressources ou à toutes les ressources propres peut être bloqué ou débloqué par d'autres composants de communications (A1 - A4, B1 - B11) dans les composants de communication (A1 - A4, B1 - B11).

5. Réseau selon l'une quelconque des revendications précédentes 1 à 4,
**caractérisé en ce**
**que** les composants de communication (A1 - A4, B1 - B11) sont mis au point pour pouvoir envoyer aussi bien des premiers que des deuxièmes messages de recherche et/ou pour pouvoir y répondre.

6. Réseau selon l'une quelconque des revendications 1 à 5, **caractérisé en ce**
**que** le moyen fonctionnel de recherche est mis au point de telle manière qu'il envoie au moins un premier message de recherche et des deuxièmes messages de recherche jusqu'à ce que la ressource recherchée se présentant sous la forme de la passerelle soit trouvée dans le réseau (VoIP) et qu'une utilisation de la ressource sous la forme de la passerelle puisse avoir lieu à l'aide des informations transmises dans la réponse à un des deuxièmes messages de recherche.

7. Réseau selon l'une quelconque des revendications 1 à 6, **caractérisé en ce**
**que** la réponse comprend le type et le nombre des services disponibles ainsi que le type de l'accès propre au réseau, y compris la largeur de bande et la disponibilité et l'information de site.

8. Procédé servant à administrer de manière autonome un réseau à commutation de paquets (VoIP) comprenant des composants de communication (A1 - A4, B1 - B11), auxquelles sont associées des adresses et qui communiquent les uns avec les autres à l'aide desdites adresses, sachant
a) que plusieurs des composants de communication (A1 - A4, B1 - B11) présentent des ressources, qui comprennent des passerelles pouvant être utilisées dans le réseau (VoIP) servant à connecter le réseau à commutation de paquets (VoIP) avec un réseau à commutation de circuits (ISDN), sachant que des fonctions de recherche intégrées dans plusieurs des composants de communication (A1 - A4, B1 - B11) sont utilisées afin de déterminer les adresses de composants de communication (A1 - A4, B1 - B11) supplémentaires présentant les ressources,
b) qu'un premier message de recherche, qui comprend, outre l'adresse du composant de communication (A3), dont la fonction de recherche envoie le premier message de recherche, une information portant sur le fait que d'autres composants de communication (A1, A2, A4, B1 - B11) sont recherchés, qui supportent la fonction de recherche, est envoyé par chaque fonction de recherche servant à déterminer les adresses,
c) que suite au premier message de recherche, une réponse pertinente avec son adresse est retournée par chaque composant de communication (A1, A2, A4, B1 - B11) atteint, qui supporte la fonction de recherche,
d) qu'immédiatement après au moins un deuxième message de recherche comprenant une information portant sur le type recherché de ressource sous la forme de la passerelle est envoyé à au moins un des composants de communication (A1 - A4, B1 - B11), qui ont répondu au premier message de recherche par la réponse pertinente, par la fonction de recherche et qu'au moins un des composants de communication (A1 - A4, B1 - B11), qui peut fournir le type recherché de ressource sous la forme de la passerelle, répond au deuxième message de recherche, sachant
e) que la réponse au deuxième message de recherche inclut respectivement des informations spécifiques portant sur la passerelle,
f) que le deuxième message de recherche est transféré à d'autres composants de communication (A1 - A4, B1 - B11) également par les composants de communication (A1 - A4, B1 - B11), qui répondent au deuxième message de recherche, et
g) que les adresses, obtenues à l'aide de la réponse pertinente et à l'aide de la réponse au deuxième message de recherche, des composants de communication (A1 - A4, B1 - B11) sont utilisées afin d'établir des connexions de communication.
